# EUROPEAN PATENT APPLICATION

(11) **EP 1 764 903 A1**
(43) Date of publication of application: **21.03.2007**
(21) Application number: 05388074.6
(22) Date of filing: 05.09.2005
(51) Int. Cl.: H02P 5/52

(54) **A microprocessor controlled DC power supply and a method for controlling a first and a second electric motor**

(71) Applicant: Ideassociates (IOM) Limited, Douglas, Isle of Man IM99 1RB (GB)
(72) Inventor: Fich, Preben Bo, Sandgate, Kent CT20 3 AT (GB); Willadsen, Curt Michael Petersen, DK-3100 Horbaek (DK)
(74) Representative: Nielsen, Kim Garsdal

(57) **Abstract**

A microprocessor controlled DC power supply and a method for controlling a first and a second electric motor.

The invention relates to a method for controlling a first and a second electric motor by means of a microprocessor controlling the power supply to said first motor and said second motor. The method involves the steps of: Monitoring the rotational angles of the outputs of said first motor and said second motor. Disabling the current supply to that motor when one of said first motor or said second motor reaches said predetermined angle. Enabling the current supply to said one of said first motor and said second motor again when the other of said first motor and second motor reaches said predetermined angle. The invention also relates to a power supply for executing the method.

## Description

The present invention relates to a method for controlling a first and a second electric motor by means of a microprocessor controlling the power supply to said first motor and said second motor, to the use of such a method in furniture, as well as to a microprocessor controlled DC power supply.

PWM or switch-mode controlled electric motors are well-known in the art and employed in a variety of electric drive applications including one or more electric DC motors. Typical applications, to which the present invention pertains, include drive arrangements for lifting and lowering of height adjustable furniture components like tabletops, chairs and other resting furniture for domestic, office and medical use, motion control of robot devices etc.

In such applications it is desirable to use several motors, e.g. two, one at each end of the tabletop. If two motors are used, they will often be subjected to different loads, and they must then be synchronized in their operation order to keep the tabletop level.

On this background it is the object of the invention to provide a method for controlling a first and a second electric motor in synchronicity.

According to a first aspect of the invention this is achieved by a method for controlling a first and a second electric motor by means of a microprocessor controlling the power supply to said first motor and said second motor, characterized in the steps of a) monitoring the rotational angles of the outputs of said first motor and said second motor, b) when one of said first motor or said second motor reaches said predetermined angle disabling the current supply to that motor, c) enabling the current supply to said one of said first motor and said second motor again when the other of said first motor and second motor reaches said predetermined angle.

With this method it is possible to operate the DC motors in discrete steps of operation, where the first motor to reach a given angle of rotation stops and waits for the other. Thus, with appropriately chosen steps the overall operation of the motors is synchronous.

According to a preferred embodiment of the method, said rotational angles of the outputs of said first motor and said second motor are monitored by means of a detection of the back electromotive force from said first and second motor respectively. The inventors of the present invention have realized that this is an efficient way of detecting the rotational angle of a commutated electric DC motor. In particular, it offers the advantage that the angular position of the motor armature is detected directly, and does not involve any other means such as magnetic or optical tachometers. It is thus not necessary to draw any electrical leads to the electric motor other than the supply lines.

According to a further preferred embodiment of the method, said back electromotive force is detected by measurement of the voltage over an inductor connected in series with said motor in a supply line thereto. This allows the detection of the rotational angle to be detected by measurements made directly in the power supply for the motors.

According to another preferred embodiment of the method, said predetermined angle corresponds to one commutation of the motor. Thus an ordinary commutated DC motor may effectively be operated as a stepper motor, operated in discrete steps corresponding to the number of commutations per revolution of said motor.

According to an especially preferred embodiment, said first motor and said second motor are controlled by one and the same microprocessor. This is the most efficient in terms of resources because one microprocessor is fully capable of performing the calculations necessary to control two motors.

This is even the case when according to a further preferred embodiment, the motors are controlled by means of pulse width modulation by said microprocessor. Pulse width modulation is preferred because it allows the motors to be operated concurrently with pulses alternating polarity.

According to a second aspect of the invention, the method is used for the control of motors in furniture.

According to a third aspect of the invention, there is provided a microprocessor controlled DC power supply, characterized in that it comprises means for detecting the back electromotive force from a first commutated electric DC motor connected thereto. Having means for detecting the back electromotive force from a motor connected thereto integrated in the power supply allows the power supply to keep track of and control the rotational angle of the motor by monitoring the supply leads to the motor. Thus, any need for separate sensing means such as optical or magnetic tachometers attached to the motor as well as connections from the power supply thereto is obviated.

According to a preferred embodiment, said means for detecting the back electromotive force comprises an inductor, over which a voltage is measured. This allows the microprocessor to directly detect commutations and control the current to said motor. E.g. stopping a pulse width modulated supply current to the motor.

According to a further preferred embodiment, said microprocessor is adapted to stop the power supply to the electric motor upon detection of a predetermined number of commutations. This allows the operation of more than one commutated electric DC motor in synchronicity because the first motor to reach a predetermined angle of rotation may stop and wait until the rest of the motors have reached the same angle of rotation.

In an especially preferred embodiment said number is one. This allows a single commutated electric DC motor to effectively operate as a stepper motor, irrespective of whether it operates in synchronicity with other commutated DC motors.

According to another preferred embodiment, said microprocessor is adapted to control at least one further commutated electric DC motor connected to said power supply, independently of said first commutated electric DC motor. Thus, a single power supply for the control of two motors is provided. Furthermore, this single power supply allows the synchronous operation of the two motors.

The invention will now be described in greater detail based on non-limiting exemplary embodiments and with reference to the drawings, on which
fig. 1 shows a flowchart of a preferred embodiment of the method according to the invention, and
fig. 2 shows a diagram of a power supply adapted for executing the method according to the invention.

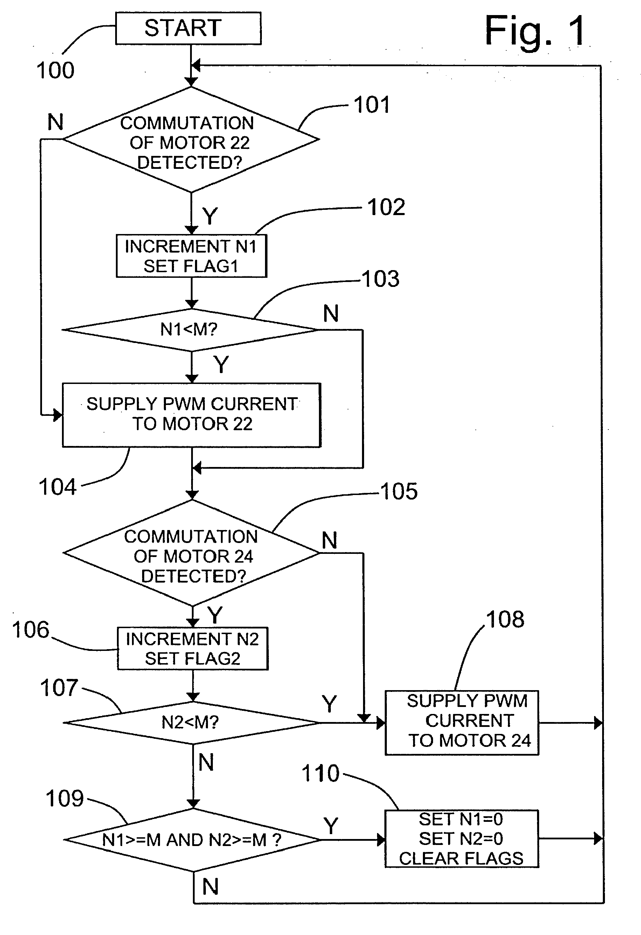

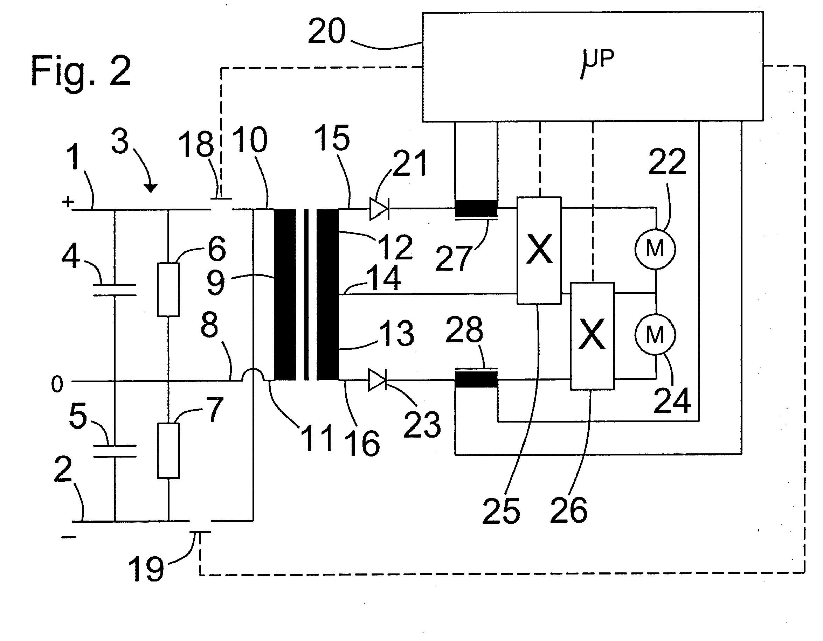

The flow chart of fig. 1 illustrates a preferred embodiment of the method according to the invention for controlling two commutated electric DC motors 22, 24 by means of a microprocessor 20, cf. fig 2.

The method starts in step 100 and proceeds to the decision in step 101. If in step 101 a commutation of the motor 22 is not detected, the microprocessor 20 proceeds to step 104 and provides at least one pulse width modulated current pulse to the motor 22. If on the other hand a commutation is detected in step 101 the microprocessor increments a counter N1 in step 102 and sets a detection flag FLAG1. Then, in step 103 the microprocessor 20 checks whether the counter N1 has reached a predetermined value M. If N1 has not yet reached the predetermined value M, the microprocessor 20 proceeds to step 104 and provides at least one pulse width modulated current pulse to the motor 22. If N1 has reached or exceeded the predetermined value M, the microprocessor proceeds to step 105 to check whether a commutation has been detected for the second motor 24.

Essentially, the steps 105 to 108 correspond to the steps 101 to 104. Thus, if in step 105 a commutation of the motor 24 is not detected, the microprocessor 20 proceeds to step 108 and provides at least one pulse width modulated current pulse to the motor 24. If on the other hand a commutation is detected in step 105, the microprocessor increments a counter N2 in step 106 and sets a detection flag FLAG2. Then, in step 107 the microprocessor 20 checks whether the counter N2 has reached a predetermined value M. If N2 has not yet reached the predetermined value M, the microprocessor 20 proceeds to step 108 and provides at least one pulse width modulated current pulse to the motor 24, upon which the microprocessor returns to step 101 and repeats the process. If N2 has reached or exceeded the predetermined value M, the microprocessor 20 proceeds to step 109 to check whether both of N1 and N2 have reached or exceed the predetermined value M. If this is the case, N1 and N2 are both set to zero, and the detection flags FLAG1 and FLAG2 are cleared in step 110, and the microprocessor returns to step 101 to repeat the process.

The reason for the use of the flags FLAG1 and FLAG2 is that after detection of the predetermined number of commutations, the current supply to the motor will be stopped by the microprocessor, thus not allowing a direct detection in steps 101 or 105.

Here it should be mentioned that even though the above description relates to a method for controlling two motors, the skilled person will realize that it will possible to control further motors using the same principle, i.e. by adding appropriate variables N3 to Nn and flags FLAG3 to FLAGn, and duplicating the steps 101 to 104 for each of the further motors.

The predetermined value M may depend on the actual application, in which synchronized operation of two or more motors is desired. In particular, M may have the value 1, thus effectively turning each of the DC motors 22, 24 into a stepper motor. This would also be the case for a single motor, which then would not need any synchronization.

As will be understood, the method according to the invention operates each of the motors 22, 24 in steps in such a way that the faster of them stops after a predetermined angle and then wait for the remainder of the motors to reach this predetermined angle. This angle could correspond to one commutation as indicated above, but in principle any multiple of commutations could be used, e.g. corresponding to one or more full revolutions or the motor.

In respect of synchronization it should be noted that the microprocessor 20 may furthermore adjust the pulse width modulation to increase the current supplied to a motor if that specific motor consistently runs slower that the first to reach the predetermined angle. Evidently, as an alternative, the current to the faster motor could be reduced.

Evidently each of the motors 22, 24 could be controlled by its own individual microprocessor 20. It is however preferred to use one single microprocessor 20 for the control of several motors 22, 24, as the processing speed of the microprocessor 20 will be fully sufficient to do so.

Fig. 2 illustrates a microprocessor controlled DC power supply suitable for executing the method according to the invention.

The power supply is preferably a DC/DC power supply. The power supply is provided with DC, such as rectified mains, at the positive terminal 1 and the negative terminal 2. Between the positive terminal 1 and the negative terminal 2 there is provided a voltage divider 3. In the preferred embodiment, the voltage divider 3 comprises two capacitors 4, 5 and two resistors 6, 7. Preferably the two capacitors 4, 5 have the same capacitance and the two resistors 6, 7 the same resistance. Thus, at the centre tab 8 of the voltage divider 3, there will be an intermediate potential. For illustration purposes, the intermediate potential is marked 0, but evidently the intermediate potential floats and is subject to variations depending on the current drawn from the voltage divider 3, unless it is stabilized by an external connection to a fixed reference potential.

The current is intermittently drawn from the voltage divider 3 by a transformer having a primary winding 9 with a first end 10 and a second end 11. The transformer has two secondary windings 12, 13 with a common terminal 14, and a first end terminal 15 and a second end terminal 16. The two secondary windings 12, 13 are preferably identical in number of turns and direction. The primary-to-secondary ratio is preferably 20:4/4 for the applications described, but may evidently differ from that ratio, depending on the actual application.

In order to allow the transformer to intermittently draw current from the voltage divider 3, the DC/DC power supply comprises two controlled switches 18, 19. The first controlled switch 18 is connected between the first end 10 of the primary winding 9 of the transformer and the positive terminal 1. The second controlled switch 19 is connected between the first end 10 of the primary winding 9 of the transformer and the negative terminal 2. Preferably the controlled switches 18, 19 are semiconductor switches controlled by means of a microprocessor 20. If galvanic separation between the primary winding 9 and secondary winding 12 of the transformer is desired, the control lines to the controlled switches 18, 19 may include optocouplers (not shown).

Both the controlled switches 18, 19 are operated intermittently by the microprocessor 20, e.g. according to a pulse width modulation scheme, as mentioned above.

The microprocessor 20 ensures that the controlled switches 18, 19 are not active at the same time, but otherwise the microprocessor operates the controlled switches 18, 19 independently of each other.

When said first controlled switch is active, current flows from the positive terminal 1 through the primary winding 9 to the centre tab 8 of the voltage divider 3, giving rise to a flux with a first direction in the transformer, which in turn gives rise to a current in the secondary winding. The current flows in the first secondary winding 12, through a first diode 21 connected to the first end terminal 15 to a first motor 22 and back to the common terminal 14. A second diode 23 prevents any current from running in the second secondary winding 13.

When said second controlled switch is active, current flows from the negative terminal 2 through the primary winding 9 to the centre tab 8 of the voltage divider 3, giving rise to a flux with a second direction in the transformer, which in turn gives rise to a current in the secondary winding. In this case the current flows in the second secondary winding 13, through the second diode 23 connected to the second end terminal 16 to a second motor 24 and back to the common terminal 14. Here, the first diode 21 prevents any current from running in the first secondary winding 12.

Since the controlled switches 18, 19 may be controlled independently of each other, it is possible to control the supply to two motors 22, 24 independently of each other using only one single transformer. In particular, with appropriate choice of modulation and duty cycle, the two controlled switches 18, 19 may be controlled in an alternating manner, the first controlled switch 18 being in the active part of its duty cycle, while the second controlled switch 19 is in its inactive part of the duty cycle, and vice versa. However, it is just as well possible to have the first controlled switch 18 performing a number of duty cycles without the second controlled switch 19 being active at all, and vice versa.

According to the invention, the power supply is especially adapted for the control of commutated electric DC motors 22 and 24, respectively.

Since in many applications, such as the tabletops mentioned above, it is necessary to reverse the direction of rotation of the motor, change-over switches 25, 26 for reversing the polarity in the supply lines to the motors 22, 24 have been introduced in the supply lines to the motors 22, 24. The change-over switches are preferably solid state switches controlled by the microprocessor 20. The microprocessor 20 is preferably adapted to operate the change-over switches 25, 26 in no-current conditions only in order to avoid unnecessary stress. The change-over switches 25, 26 do thus not have to have any load-breaking capacity. Moreover, the microprocessor prevents the two change-over switches 25, 26 from assuming conditions where the secondary windings 12, 13 are short circuited.

Bearing in mind the background of the invention, viz. height adjustable tabletops where two motors are used and must be synchronized in their operation order to keep the tabletop level, even when subjected to different loads, the power supply further comprises two inductors 27, 28 placed in series with a respective one of said first motor 22 and second motor 24. These inductors 27, 28 serve as means for measuring the back electromotive force from the respective commutated electric DC motors 22, 24. The inventors of the present invention have realized that the back electromotive force from the motors is readily detectable and may thus be used as a means for determining the angular position of the armature of the DC motor, provided of course that the number of commutations per revolution of the motor 22, 24 is known. The commutations are detected by the microprocessor 20 by means of a voltage measured over the inductors 27, 28, possibly using appropriate additional circuitry, not shown.

If one motor is subjected to a smaller load than the other, and consequently runs faster, the microprocessor 20 will stop the power supply to that motor at each and every commutation, or after a predetermined number of commutations. The microprocessor 20 will then wait for the other motor to commutate, before it supplies the first motor again. Thus, the first motor to commutate may simply be left to wait until the other motor commutates, and first motor 22 and the second motor 24 will effectively work in synchronicity, as far as the overall angle of rotation is considered.

As mentioned, the fact that the motors are run in steps, does not exclude that the duty cycle ratio for the motors are reduced or increased according to a predetermined scheme, which depends on the application, and does thus not form part of this invention. The duty cycle ratio being understood as the ratio between the time the switching means is active to the sum of an active-inactive cycle.

## Claims

1. A method for controlling a first and a second electric motor by means of a microprocessor controlling the power supply to said first motor and said second motor, **characterized in** the steps of
a) monitoring the rotational angles of the outputs of said first motor and said second motor,
b) when one of said first motor or said second motor reaches said predetermined angle disabling the current supply to that motor,
c) enabling the current supply to said one of said first motor and said second motor again when the other of said first motor and second motor reaches said predetermined angle.

2. A method according to claim 1, **characterized**
**in that** said rotational angles of the outputs of said first motor and said second motor are monitored by means of a detection of the back electromotive force from said first and second motor respectively.

3. A method according to claim 2, **characterized**
**in that** said back electromotive force is detected by measurement of the voltage over an inductor connected in series with said motor in a supply line thereto.

4. A method according to any one of claims 1 to 3, **characterized in that** said predetermined angle corresponds to one commutation of the motor.

5. A method according to any one of the preceding claims, **characterized in that** said first motor and said second motor are controlled by one and the same microprocessor.

6. A method according to any one of the preceding claims **characterized in that** the motors are controlled by means of pulse width modulation by said microprocessor.

7. The use of the method according to any one of claims 1 to 6 in furniture.

8. A microprocessor controlled DC power supply, **characterized in that** it comprises means for detecting the back electromotive force from a first commutated electric DC motor connected thereto.

9. A microprocessor controlled DC power supply according to claim 8, **characterized in that** said means for detecting the back electromotive force comprises an inductor, over which a voltage is measured.

10. A microprocessor controlled power supply according to any one of claims 8 or 9, **characterized in that** said microprocessor is adapted to stop the power supply to the electric motor upon detection of a predetermined number of commutations.

11. A microprocessor controlled power supply according to claim 10, **characterized in that** said number is one.

12. A microprocessor controlled power supply according to any one of claims 8 to 11, **characterized in that** said microprocessor is adapted to control at least one further commutated electric DC motor connected to said power supply independently of said first commutated electric DC motor.
